# EUROPEAN PATENT APPLICATION

(11) **EP 1 569 145 A1**
(43) Date of publication of application: **31.08.2005**
(21) Application number: 04018010.1
(22) Date of filing: 29.07.2004
(51) Int. Cl.: G06F 17/60

(54) **System and apparatus for managing information on chemical substances used in products**

(30) Priority: 01.08.2003 JP 2003205244
(71) Applicant: Hitachi, Ltd., Tokyo 100-8010 (JP)
(72) Inventor: Arai, Shinichi Hitachi, Ltd., IPG., Chiyoda-ku Tokyo 100-8220 (JP); Kumazawa, Takaaki Hitachi, Ltd., IPG., Chiyoda-ku Tokyo 100-8220 (JP); Haga, Noriyuki Hitachi, Ltd.,IPG., Chiyoda-ku Tokyo 100-8220 (JP); Sekiya, Yoshiharu Hitachi, Ltd., IPG., Chiyoda-ku Tokyo 100-8220 (JP); Hiroshige, Yuzo Hitachi, Ltd.,IPG., Chiyoda-ku Tokyo 100-8220 (JP)
(74) Representative: Strehl Schübel-Hopf & Partner

(57) **Abstract**

A method is established which, through the use of a parts table (24), makes it possible to recognize amounts of chemical substances contained in in-company manufactured parts. This establishment allows implementation of the compliance with regulations on the chemical substances based on laws or the like.

Taking advantage of the following four types of data, types and amounts of chemical substances contained within a product are computed and displayed, thereby presenting laws or the like which regulate the chemical substances: Parts data (21, 24) indicating a list of parts and in-company manufactured parts used in the product and chemical substances contained in the manufacturing processes, supply-maker data (30) indicating supply sources of the parts and materials, parts chemical-substance data (40) indicating the chemical substances contained in the parts, and law-and-others regulated-substance data (50) indicating contents of the law-based regulations, client-based safety criterions, or the like.

## Description

### BACKGROUND OF THE INVENTION

### Field of the Invention

The importance of environment issues has been increasing year by year, and regulations on chemical substances based on laws are also being enhanced. For makers which produce products, it is requested of course to comply with the regulations based on the laws. Moreover, it is absolutely necessary for the makers to assume social responsibility for prevention of environmental pollutions by, e.g., voluntarily defining the criterion prior to establishment of the laws.

### Description of the Related Art

In recent years, there has existed a tendency for parts makers to publicize information on chemical substances contained in the parts that the supply-maker. In response to the trend by the parts makers like this, the product makers are developing systems for recognizing chemical substances contained in the products by tabulating the information on the chemical substances contained in the respective parts which configure the products. As an example of such systems, there has existed a system as disclosed in JP-A-2001-38340. An object of this system is as follows: Based on environmental-impact substances or the like within materials of a product, the environmental impact of the product is automatically assessed in the design process. Furthermore, an environmental-assessment-use parts table for the product is created, thereby assessing the environmental impact of the product. This parts table is created using a first database including parts-specific codes and configuration parts names, and a second database including impact information on the environmental-impact chemical substances.

Within a company, in general, unique and consistent management numbers, which are referred to as "figure numbers" or "item codes", are added to the parts on each part basis, thereby identifying the parts explicitly. In addition, the management numbers are described on a parts table as well, thereby managing the parts. In this way, the parts are managed by using the management numbers referred to as the "figure numbers" or "item codes". With respect to outside-manufacturing commissioned goods whose manufactures have been commissioned to outside parts makers, and purchased goods purchased from the parts makers, the above-described management method prevents contradictions from occurring for contents or identifications of the parts even between different sections such as material department and purchase department.

Meanwhile, parts manufactured in the company, in the state of having finally become the ones ready to be integrated into the product, can be dealt with in basically the same way as the outside-manufacturing commissioned goods and the purchased goods. At the stage prior thereto, however, the parts manufactured therein exist as information including plural materials, manufacturing processes, and the like. The parts table (usually referred to as "BOM (: Bill of Materials)") for managing a list of the parts used in the product is configured based on the "figure numbers" or "item codes". When, as the in-company manufactured parts, there exists only the information on the materials, manufacturing processes, and the like, the in-company manufactured parts could not be written on the "parts table". Also, the BOM is used as the purchase list for the necessity-amount computation of the parts necessary for assembly of the product. Also, the BOM is used for the final assembly step of the product. Of the materials of the,in-company manufactured parts, there exist materials which are unnecessary for the necessity-amount computation and final assembly step. Such unnecessary materials were not considered to be written on the "parts table". In the status quo, the information on the materials, manufacturing processes, and the like of the in-company manufactured parts are described not on the "parts table" but on manufacture arrangement drawings or the like. Accordingly, such information had to be considered independently of the outside-manufacturing commissioned goods and the purchased goods which have been described on the "parts table".

### SUMMARY OF THE INVENTION

The present invention relates to a system and an apparatus for managing information on chemical substances contained in products.

As described earlier, there has existed the tendency for the parts makers to publicize the information on the parts. As a result, with respect to the supplied parts from the parts makers, the use of the above-described system allows the chemical substances contained in the parts to be recognized based on the publicized information. The parts manufactured in the company, however, could not be managed in basically the same way as the supplied parts from the parts makers. The reasons for this are as follows: The information exists as the form that can not be written on the "parts table". The materials, even if recognized, are the ones that are not considered to be written on the "parts table". Otherwise, the information is managed as the data independent of the one described on the "parts table". Consequently, with respect to the in-company manufactured parts, development of the following system has been requested: Namely, the system makes it possible to consider factors ranging from the materials of the parts up to information on chemical substances mixed in the manufacturing processes, thereby allowing the implementation of systematic and accurate management of the chemical substances contained in the parts.

The present invention provides a system for managing information on chemical substances contained in products. Here, the system includes a parts data storage unit for storing parts data on products, and parts data describing materials of in-company manufactured parts and substances added thereon during manufacturing processes. Moreover, codes (i.e., material management numbers) are set in such a manner that the codes are auxiliarily added to parts management codes (i.e., parts management numbers) in a parts table of the parts data. This setting is performed in order to describe therein the materials of the in-company manufactured parts and the substances added thereon during the manufacturing processes. Otherwise, a file is used in order to define the materials of the in-company manufactured parts and the substances added thereon during the manufacturing processes.

In the more detailed configuration of the present invention, the system further includes the following units: The parts data storage unit for storing the parts and the materials used in the products, and contents of all the substances added thereon during the manufacturing processes, a supply-maker data storage unit for storing information indicating supply sources of the parts and the materials stored in the parts data storage unit and indicating which products of the supply sources the parts correspond to, a parts chemical-substance data storage unit for storing types and contents of the chemical substances, and a law-and-others regulated-substance data storage unit for storing information such as a regulation based on a law and a safety criterion specified by a client. Here, the parts and the materials are managed by using the management numbers which are common to these storage units. Also, concerning the chemical substances as well, management codes are set for the chemical substances on a one-to-one correspondence basis. Here, the management codes set are used in a manner common to the parts chemical-substance data storage unit and the law-and-others regulated-substance data storage unit.

Furthermore, a method for managing the information on the chemical substances contained in the products includes the following steps: Collecting, from the parts data storage unit, the data on the respective parts which configure the products, acquiring, from the supply-maker data storage unit, the data on the makers of the parts and on the parts on the basis of the collected data on the parts, and collecting, from the parts chemical-substance data storage unit, the management codes for indicating the chemical substances contained in the parts on the basis of the collected data on the makers of the parts and on the products. Also, chemical substances which should be searched for are selected from the law-and-others regulated-substance data storage unit to collect management codes for the chemical substances. Then, the management codes collected and stored are compared with each other to extract the management codes which coincide with each other, thereby managing and displaying, on a display unit, types and amounts of the search-target chemical substances contained in the products.

### BRIEF DESCRIPTION OF THE DRAWINGS

FIG. 1 is a diagram for illustrating the configuration of a system in an embodiment of the present invention;
FIG. 2 is a diagram for illustrating the schema of a parts data storage unit 1;
FIG. 3 is a diagram for illustrating the schema of a supply-maker data storage unit;
FIG. 4 is a diagram for illustrating the schema of a parts chemical-substance data storage unit;
FIG. 5 is a diagram for illustrating the schema of a law-and-others regulated-substance data storage unit;
FIG. 6 is a diagram for illustrating the outline of a parts configuration tree;
FIG. 7 is a diagram for illustrating the outline of internal data utilized at the execution processing time of a search-target chemical substance list;
FIG. 8 is a diagram for explaining a manner in which a search-target hit chemical-substance list and a search-target hit chemical-substance amount of the search result are stringed to the parts configuration tree;
FIG. 9 is a diagram for illustrating a displayed example of the search-condition setting screen;
FIG. 10 is a diagram for illustrating a displayed example of the contained chemical-substance tabulation result screen;
FIG. 11 is a diagram for illustrating a displayed example of the contained chemical-substance tabulation result screen;
FIG. 12 is a diagram for illustrating a displayed example of the contained chemical-substance tabulation result;
FIG. 13 is a diagram for explaining a method of describing materials and substances added in manufacturing processes;
FIG. 14 is a diagram for illustrating a displayed example of the screen for inputting the materials and the substances added in the manufacturing processes;
FIG. 15 is a diagram for illustrating an example where the materials and the substances added in the manufacturing processes are integrated into a tree structure;
FIG. 16 is a diagram for illustrating an example where the materials and the substances added in the manufacturing processes are integrated into the list of a parts table; and
FIG. 17 is a diagram for explaining the management and on-screen simultaneous edit function of an E-BOM and a M-BOM.

### DETAILED DESCRIPTION OF THE INVENTION

Hereinafter, referring to the drawings, the explanation will be given below concerning embodiments of the present invention.

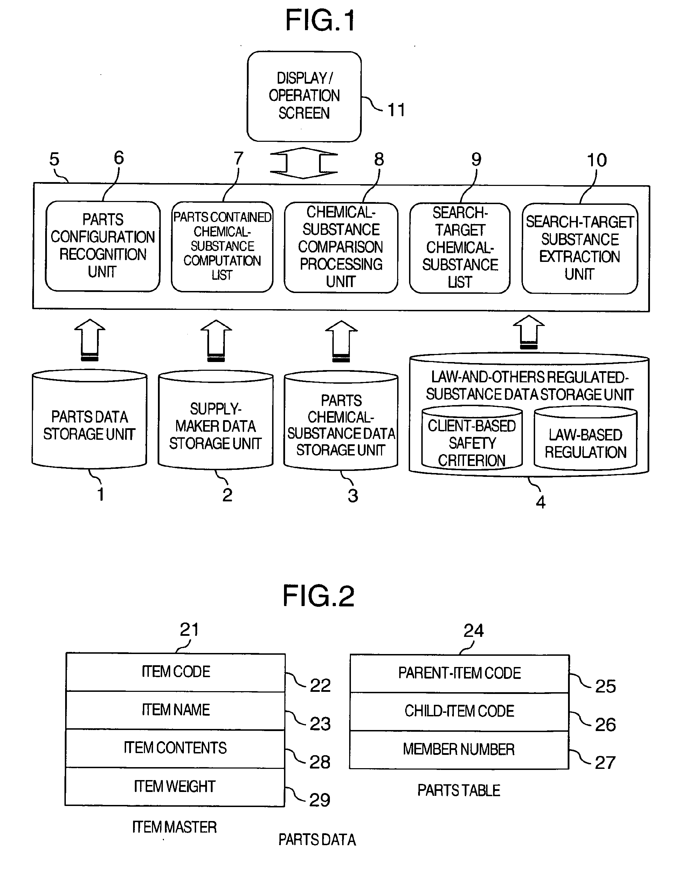

FIG. 1 is a diagram for illustrating the system configuration of an embodiment of the present invention.

The system in the present embodiment is implemented on an ordinary computer which includes an input/output unit, a storage unit, a memory, and an arithmetic-computation unit. Data of data storage units, which will be explained hereinafter, are stored in the storage unit. Also, each processing unit is implemented by a configuration where the computer executes the corresponding program read into the memory.

In the present embodiment, the storage unit includes the four data storage units. The first one, which is a parts data storage unit 1, stores parts and materials used in products, and contents of all substances added thereon during manufacturing processes. The second one, which is a supply-maker data storage unit 2, stores management numbers and the like for uniquely identifying information which, regarding the parts and the materials stored in the parts data storage unit 1, indicates the supply-makers, which products of the supply-makers the parts correspond to, and the like. The third one, which is a parts chemical-substance data storage unit 3, stores contents of chemical substances contained in the parts and the materials. Moreover, the fourth one, which is a law-and-others regulated-substance data storage unit 4, stores chemical substances which are specified by regulations or safety criterions for each regulation based on a law or each safety criterion specified by a client, and which should be searched for when tabulating and assessing the chemical substances of the products. Although, in the present embodiment, a method for managing the chemical substances will be explained as the configuration including the above-described four data storage units, the number of the data storage units need not necessarily be four.

Next, the explanation will be given below concerning structures of these data storage units. In the following explanations, the structures of these data storage units will be explained as schemas of databases. Of course, from the practical standpoint, the data in file format is equivalent to the data in database format.

First, the explanation will be given below regarding the parts data storage unit 1.

The parts data storage unit 1 includes an item master 21 and a parts table 24. The item master 21 and the parts table 24 store therein all items used in products. An item code 22 of the item master 21 stores therein management codes coded so that the respective parts will be determined uniquely. An item name 23 stores therein names of the parts. The parts table 24 describes, as parent-child relationship, the relationship among the parts which configure the products. A parent-item code 25 stores therein the item codes of assembly parts which are at higher levels than parts of a child-item code 26. A member number 27 stores therein the number which indicates how many parts of the child-item code 26 will be used. In the item code of the item master 21 and the item codes of the parts table 24, the management codes common thereto are used. Even if there exist the plural item records, using the common management codes in this way makes it possible to recognize the relationship among the records. This allows recognition of all the parts to be used in a single product.

As described above, the parts data storage unit 1, which includes the item master and the parts table, possesses information on parts which configure a certain product. Although, in general, the parts table describes the parts configuration as the tree-structured parent-child relationship, the parts table may employ some other representation method such as a mere list.

The supply-maker data storage unit 2 stores therein the data relating to which supply-maker's and what name of product a cache part corresponds to. This data is used when purchasing the specific part. Management codes used in an item code 31 of supply-maker data 30 of the supply-maker data storage unit 2 are also in common with the ones used in the item code 22 of the item master 21 of the parts data storage unit 1. These management codes allow the data in the parts data storage unit 1 to be made related with the data in the supply-maker data storage unit 2.

If the management codes are not used which are common to the item code 31 of the supply-maker data 30 of the supply-maker data storage unit 2 and the item code 22 of the item master 21 of the parts data storage unit 1, both of the data are made related with each other by using some related data in a separate manner.

A supply-maker code 32 stores therein company codes for uniquely identifying the supply sources of the parts. Also, a product number 34 stores therein the product number 34 of the products of the parts manufacturing makers indicated by the company codes, a product name 33, a product mass 35, a mass-unit code 36 for defining the physical unit of masses, and a product-contents explanation document 37. The product number 34 stores therein numbers added to the products of the parts manufacturing makers so that the products thereof will be identified uniquely. Also, the product-contents explanation document 37 describes outline of the products. Making reference to this document allows the user to recognize contents of the products easily. When describing in-company manufactured parts into this supply-maker data storage unit 2, a management code indicating the company of their own is written into the supply-maker code 32.

In the parts data storage unit 1 which stores therein contents of all the parts used in the products, outside-manufacturing commissioned goods and purchased goods can be managed by using the above-described item codes. However, the in-company manufactured parts, materials used for manufacturing these parts, and substances added thereon during manufacturing processes can not be described in basically the same way. Accordingly, in the present embodiment, an auxiliary mechanism is prepared in the item codes of the parts management numbers, thereby describing the materials and the substances added during the manufacturing processes. As the auxiliary mechanism, the following three schemes can be considered:
(1) Material management numbers are auxiliarily added to the item codes of the parts management numbers, thereby describing the materials and the substances added during the manufacturing processes (scheme 1).
(2) A data file is auxiliarily added to the item codes of the parts management numbers, thereby describing, into the data file, the materials and the substances added during the manufacturing processes (scheme 2).
(3) The item codes are assigned for each of the materials and each of the substances added during the manufacturing processes (scheme 3).

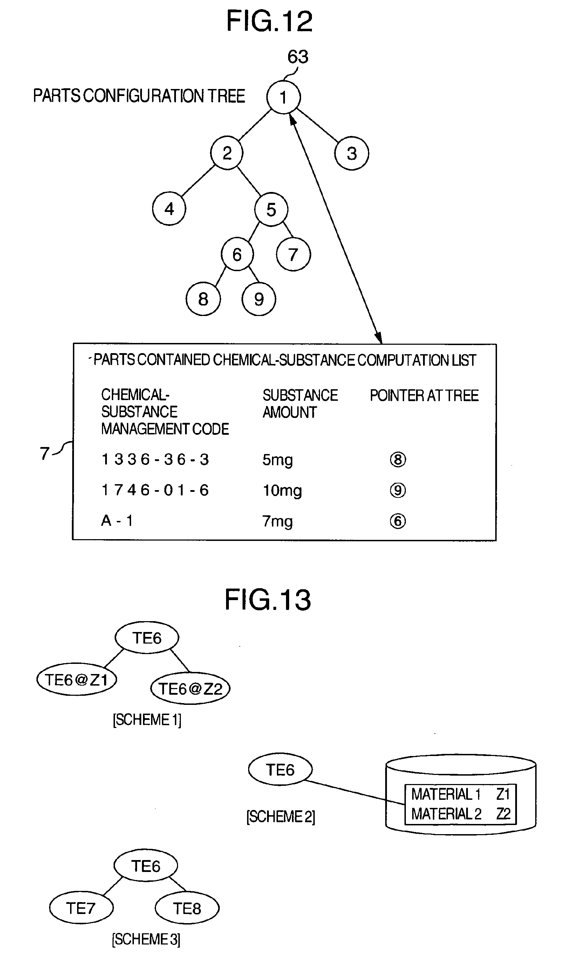

Referring to FIG. 13, the explanation will be given below concerning these three schemes.

FIG. 13 is a diagram for explaining the three schemes for describing the materials of the in-company manufactured parts and the chemical substances added thereon during the manufacturing processes in the embodiment of the present invention.

First, the "scheme 1" will be explained. The "scheme 1" is the following scheme: The material management numbers are auxiliarily added to the item codes of the parts management numbers, thereby describing the materials and the substances added during the manufacturing processes. For example, the item codes are described using a rule such as "TE + number", and the material management numbers are added thereto as "@Z + number". Consequently, it turns out that the item codes are described as "TE + number + @Z + number". As a concrete example, a code like "TE6@Z1" is allocated to materials of a part whose item code is "TE6". If information on an in-company manufactured part has been inputted, the "@Z + number" is automatically employed/allocated on the system side.

Next, the "scheme 2" will be explained. The "scheme 2" is the following scheme: The data file is added to the item codes, thereby describing, into the file, the materials and the substances added during the manufacturing processes. In order to achieve systematic recognition that the auxiliary data file for the materials and the like exists in the item codes, there is provided a flag for indicating the presence or absence of the file. Otherwise, the following mode can be considered: Information is stored into a specifically-designed file in advance, and the information is searched for, thereby achieving the recognition.

Next, the "scheme 3" will be explained. The "scheme 3", although it resembles the "scheme 1", is a scheme where the formal item codes are allocated instead of adding the auxiliary material management numbers. Namely, an item code such as "TE7" is also defined for each of the materials and each of the substances added during the manufacturing processes. The "scheme 3" is a one resulting from expanding and adapting the ordinary parts configuration up to the materials. This makes the system configuration simple enough. However, there exists a drawback that the user himself or herself is required to make a distinction between the main body of a part and the materials.

The "scheme 2", in this respect, allows the user to recognize the materials and the system clearly. In the "scheme 2", however, the parts are managed using the item codes, while the materials are described into the file. This requires that the parts and the materials be managed independently of each other, which is troublesome. Also, in order to recognize and process the parts, the materials, the substances on the computer system, there occurs a necessity for making distinctions among the respective processing methods.

The "scheme 1" exhibits none of the above-described drawbacks, despite the fact that it exhibits the advantages of the "scheme 2" and "scheme 3". Namely, the "scheme 1" allows the user to easily recognize the distinction between the parts and the materials. Simultaneously, the "scheme 1" makes it possible to process the parts, the materials, the substances on the computer system in much the same way. Accordingly, in an embodiment which will be explained below, an example based on the "scheme 1" will be explained. Whatever scheme, however, is equivalent to each other in accomplishing the object of the present patent application.

Next, based on the "scheme 1", the explanation will be given below regarding the operation of the system in the embodiment of the present invention.

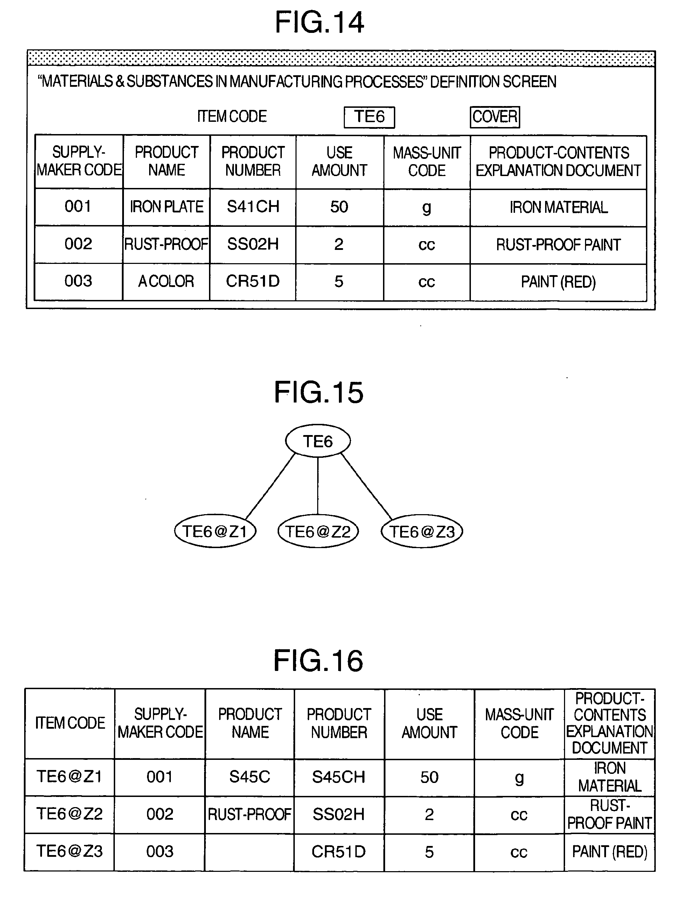

First, the explanation will be given concerning an input processing of inputting data on the materials of the parts and the substances used in the manufacturing processes. FIG. 14 is a diagram for illustrating a displayed example of the inputting screen for inputting the information on the materials of the part and the substances in the manufacturing processes.

The explanation will be given selecting, as the example, the case of inputting the tree-structured part illustrated in the scheme 1 in FIG. 13. First, the user specifies a part for which the information on the materials and the substances in the manufacturing processes are to be inputted. FIG. 14 specifies the part by the item code TE6. FIG. 14 also specifies in what portion's manufacturing of the part the materials and the substances are used.

With respect to the materials of the part of the item code "TE6" and the substances added thereon in the manufacturing processes, the user, in accordance with the screen as illustrated in FIG. 14, inputs the supply-maker code, product name, product number, use amount, mass-unit code of the use amount, and, depending on the requirement, product-contents explanation document and the like. In the example in FIG. 14, information on iron plate, rust-proof, and A color are inputted which are used for manufacturing the iron plate of a cover of the part of the item code "TE6". Having received the data input from the user, the system of the present invention adds material management numbers to the materials and the substances inputted, thereby creating parts data describing the parent-child relationship (explained in FIG. 2) as illustrated in FIG. 15. The "material management numbers" automatically added in the example in FIG. 15 are @Z1 to @Z3. The one example of the inputting screen has been illustrated in FIG. 14, but the configuration of the screen is not limited thereto. Whatever configuration is allowable as long as "material management number", "material", "use amount (weight, unit)", "maker code (material provision-source)", and "maker model (form of material)" can be inputted on the screen with respect to the materials of the part of the item code "TE6" and the substances added thereon in the manufacturing processes. Here, the correspondences can be established as follows: "Material management number" = "item code" = "TE6", "parts name" = "cover", "material" = "product name" = "iron plate", "maker code (material provision-source)" = "supply-maker code" = "001", "maker model (form of material)" = "product number" = "S41CH", "use amount (weight, unit)" = "use amount", and "mass-unit code" = "50" "g".

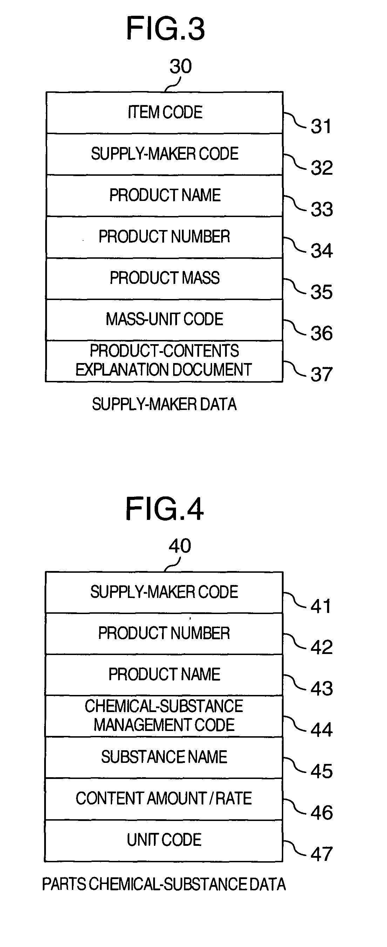

Next, parts chemical-substance data is created using this inputted information and the material management numbers added. The parts chemical-substance data, which will be explained in Fig. 4, is stored in the parts chemical-substance data storage unit 3. This makes it possible to integrate, into the data indicating the parts configuration, the materials and the substances added in the manufacturing processes which have been inputted on the screen in FIG. 14. Also, between the parts in the parts data storage unit 1 and the data in the supply-maker data storage unit 2, the management numbers common thereto are used. This makes it possible to uniquely identify which supply-source's and what product the substance corresponding to the material management number of the part corresponds to. If the "scheme 2" is employed instead of the "scheme 1" and thus the mode is selected where the data file is added, the management numbers are allocated on the system side to the materials and the substances described in the data file. This allows the part data to be processed as the tree structure as is illustrated in FIG. 15 and FIG. 16.

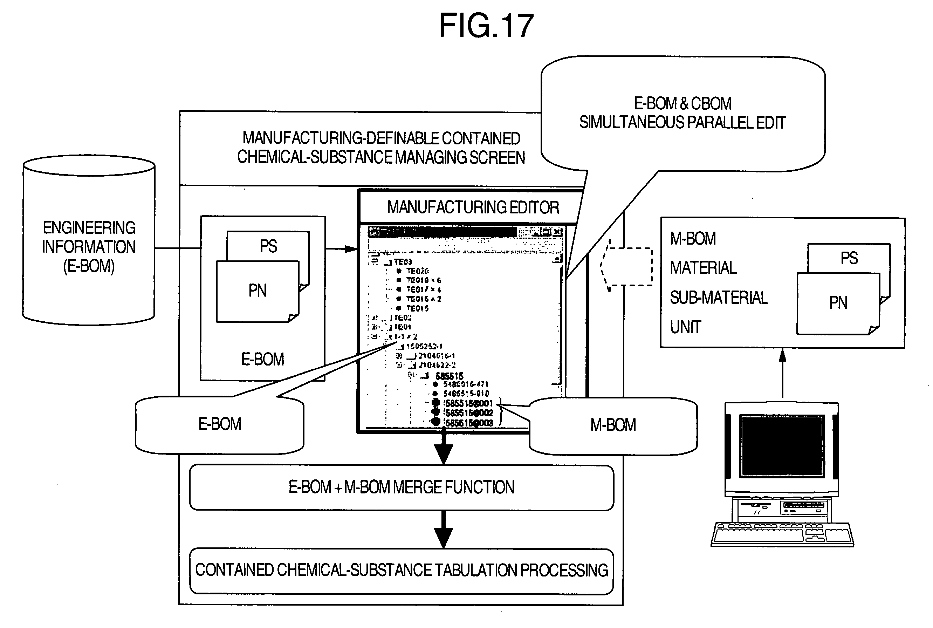

Here, referring to FIG. 17, a little more explanation will be given below concerning the processing image in the embodiment based on the "scheme 1".

FIG. 17 is a diagram for illustrating a displayed example of the screen of parts-table data in the embodiment based on the "scheme 1". In FIG. 17, an E-BOM (i.e., engineering BOM) is a parts table created by a person in charge of the engineering of a product. A M-BOM is a BOM resulting from describing the materials of the in-company manufactured parts and the substances added thereon during the manufacturing processes by adding the material management numbers. The E-BOM and the M-BOM are saved and managed independently of each other in the present invention. Moreover, when tabulating the content amount of the chemical substances or the like, based on the parent-item codes, the child-item codes, and the member numbers described on the parts tables, the data in the E-BOM and the data in the M-BOM are integrated to each other to trace and form a tree structure. This allows the processing to be performed as if the M-BOM were added to the E-BOM. Also, on the displayed screen of the computer system, the E-BOM and the M-BOM are displayed simultaneously on the BOM editing screen, thereby being edited. The E-BOM and the M-BOM are of the same structure, which is the structure as illustrated in FIG. 2 and FIG. 3. It is advisable for the parts to be defined within the BOM file. The parts-table data describes therein the parent-child relationship, and the appearance order of a certain part within the parts-table data exerts no influences on the configuration of product of the item.

As described above, the M-BOM and the E-BOM are saved and managed independently of each other. Merits that this condition results in are as follows:

First, if it comes to a situation where the materials of the in-company manufactured parts and the substances used in the manufacturing processes change, and where the amendment becomes necessary, it is sufficient to modify the data in the M-BOM. The item code of the M-BOM, which is stringed with the item code of the E-BOM, exerts no influences on the configuration of the parts tables. Also, since the M-BOM exerts no influences on the contents of the E-BOM, the engineer never falls into a situation that the contents are modified without his or her permission or consent. It becomes easier to manage both the E-BOM and the M-BOM. Also, when using the E-BOM in an already-existing system where ordering and material procurement are performed based on the E-BOM, there exists an effect that the E-BOM is usable without being influenced. This is because no modification has been made to the E-BOM itself.

Returning back to the explanation of the processing contents by the system, the parts chemical-substance data storage unit 3 stores the contents of the chemical substances contained in the parts existing in the supply-maker data storage unit 2. Consequently, the supply-maker code 32, the product number 34, and the product name 33 of the supply-maker data storage unit 2 are in common with a supply-maker code 41, a product number 42, and a product name 43 of the parts chemical-substance data storage unit 3. As a chemical-substance management code 44, a code that allows the substance to be identified uniquely is used. In the present embodiment, the CAS number is used which is the universal identification number of the chemical substance in the world. A substance name 45 describes therein the substance name defined by the CAS number. A content amount/rate 46 describes therein a numerical value indicating how much is contained in the part in terms of mass, or a numerical value indicating to what percent of mass the content amount corresponds within the mass. A unit code 47 describes therein a code for indicating in what physical unit the numerical value of the content amount/rate 46 is described. If plural substances are contained in the part, the supply-maker code 41, the product number 42, and the product name 43 remain the same. However, regarding the chemical-substance management code 44, the substance name 45, the content amount/rate 46, and the unit code 47, plural records whose contents differ are created. The case where there exist plural data means that plural substances are contained in a part.

Some explanation will be given below regarding the time of tabulating the content amounts of the chemical substances. When a certain company code, a certain product number, or combination of plural product numbers has been specified, if the data in the parts chemical-substance data storage unit 3 is searched for, and if the search has been found to be unsuccessful, it is assumed that none of the "contained chemical substances" to be managed is contained. In contrast thereto, concerning a product for which the "contained chemical substances" to be managed are unidentified, "null" is stored into the data of the chemical-substance management code 44. This makes a distinction between the case of "absent" indicating that no target chemical substance is contained at the time of search and the case of "unidentified" due to lack of information. As is the case with the part, the materials and the substances used in the manufacturing processes are also registered into the parts chemical-substance data storage unit 3 as the product by the supply maker, thereby being able to be processed in basically the same way as the part.

The law-and-others regulated-substance data storage unit 4 is a unit where chemical substances to be searched for, which are specified by regulations based on a law or safety criterions specified by a client, are stored on each law-regulation or safety-criterion basis.

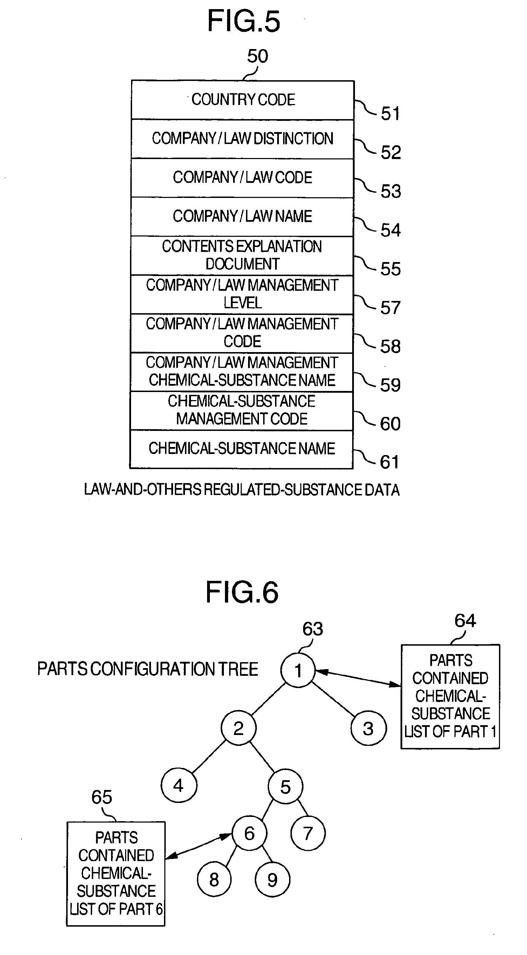

Referring to FIG. 5, the explanation will be given below concerning the configuration of law-and-others regulated-substance data 50 in the law-and-others regulated-substance data storage unit 4.

The law-and-others regulated-substance data 50 includes the following configuration components:

First, the data includes a country code 51. This is a code for indicating to what country the regulation belongs, because the regulation is performed on a world-wide scale. Also, the data includes a company/law distinction 52. This describes therein the distinction as to whether the case is a lawful regulation or a safety criterion based on a specific company or group. A company/law name 54 describes therein the name of the law or the safety criterion (e.g., "Dioxin-Family Countermeasure Action Law" or the like is written in). A contents explanation document 55 writes therein a document where the contents are explained to the user in an easy-to-understand manner (For example, articles or the like of the applied law are described. This description allows the user to recognize for what the regulation exists, i.e., the object and contents of the regulation.). Also, if a special computation or assessment technique is defined, a computation processing scheme 56 describes therein the method. A company/law management level 57 describes therein management level of a chemical substance. What is referred to as "management level of a chemical substance" here means that for the chemical substance to be contained should be abolished, the amount should be regulated, for the chemical substance to be used should be recognized, or the like. A company/law management code 58 is a code used when grouping plural regulations, chemical-substance groups where substances of almost the same characteristic are colleted, or the like thereby to manage the regulations, the groups, or the like. A company/law management chemical-substance name 59 writes therein the names corresponding to the regulations, groups, or the like which are grouped by the company/law management code 58. A chemical-substance management code 60 writes therein the chemical-substance management code defined by the CAS number or the like, or chemical-substance management code originally defined by the company/law. A chemical-substance name 61 writes therein the name of the chemical substance defined by the chemical-substance management code 60. Although not illustrated, when making reference to or complying with regulation based on another law or safety criterion specified by another client, there may be provided a nest data 62 for storing a pointer for the target law or safety criterion so that the user can make reference to the law or safety criterion.

A little more explanation will be given below regarding the company/law management code 58.

As described above, the company/law management code 58 is used for grouping the plural regulations, the chemical-substance groups where substances of almost the same characteristic are colleted, or the like thereby to manage the regulations, the groups, or the like. The configuration of the law-and-others regulated-substance data 50 in the case of the same group is as follows: The country code 51, the company/law distinction 52, the company/law name 54, the company/law management code 58, and the company/law management chemical-substance name 59 remain the same. However, regarding the chemical-substance management code 60 and the chemical-substance name 61, there exist different plural records. The assembly of all the chemical substances described by the plural records indicates contents of the group. In this way, providing the company/law management code 58 makes it possible to deal with the plural regulations in batch, or to deal with the substances as the assembly on each characteristic basis. Furthermore, it becomes possible to define the group name for each substance's classification, thereby allowing assessment of the contained substance in accordance with the definition and based on a certain object. As a concrete example, this means that, regarding substances having a similar characteristic, the presence or absence of or the amount of the substances can be recognized in a state of being regarded as a single group.

Next, a little more detailed explanation will be given below regarding the company/law management level 57. The company/law management level 57 defines in what way the substance should be managed on each client or each company basis, i.e., its management level. The management level means information indicating what extent of management is required for the target chemical substance. Concretely, the management level is described which means that for the chemical substance to be contained should be abolished, the amount should be regulated, for the chemical substance to be used should be recognized and that is all, or the like. The company/law management level 57 indicates how to deal with the substances.

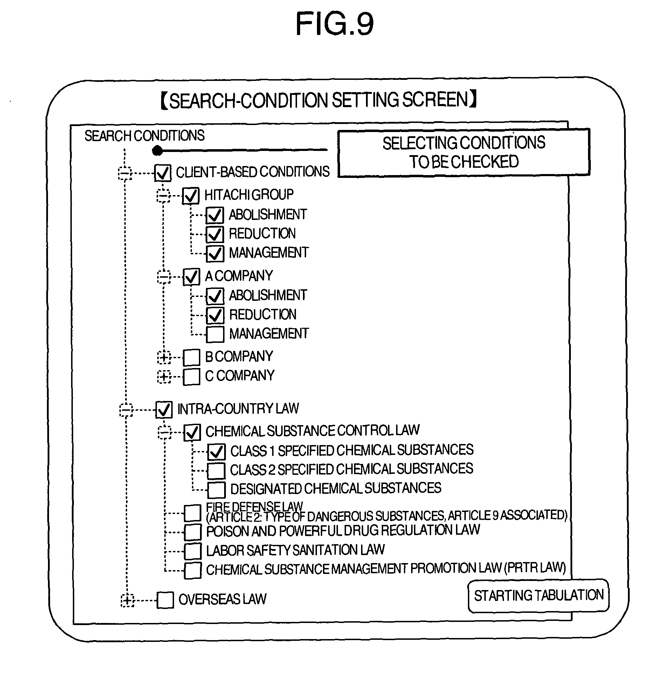

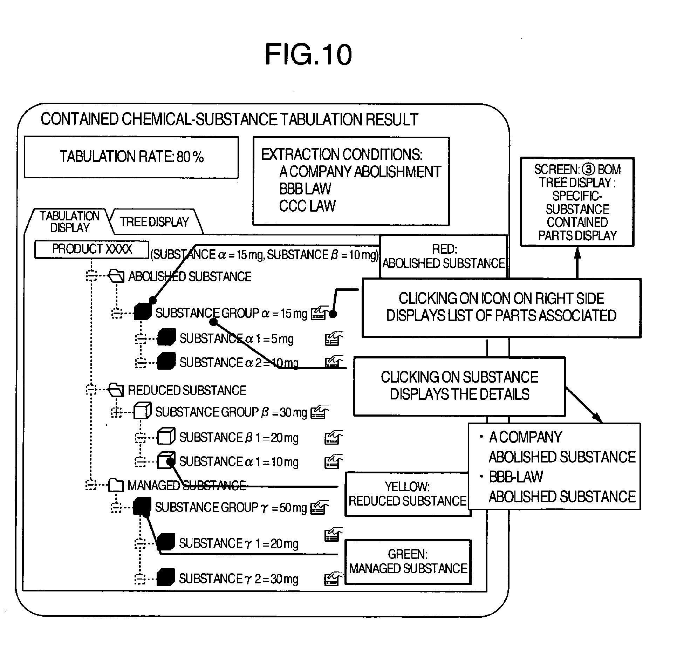

Referring to FIG. 9 and FIG. 10, the explanation will be given below concerning a concrete example of the assessment of a product by using the company/law management level 57 and the company/law management code 58.

In this example, the company/law management level 57 defines the following three management levels: "Abolishment", i.e., the level at which the chemical substance must not be used, "reduction", i.e., the level at which the substance had better not be used, and "management", i.e., the level at which the substance on which no limitation is imposed but whose use amount needs to be recognized. FIG. 9 illustrates a displayed example of the screen of a method for specifying the company/law management level 57. As illustrated in FIG. 9, lawful regulations and company-based safety criterions are specified, and information indicating at which level of the abolishment, reduction, and management the substance should be managed for each specified law-regulation or safety-criterion. Also, FIG. 10 illustrates a displayed example of the tabulation result. This tabulation result is acquired as follows: The substance group is specified using the company/law management code 58, and the management levels are inputted into the company/law management level 57, and then the tabulation is performed based on these conditions. At the time of displaying the screen, for example, a chemical substance whose management level is the highest one of "abolishment" is displayed with red, a chemical substance whose management level is "reduction" is displayed with yellow, and a chemical substance whose management level is "management" is displayed with green. This kind of display makes it easy for the user to recognize the levels. The definition and meaning of this company/law management level 57 are determined in agreement with objects of the laws and safety criterions.

The chemical-substance management code 60 in the law-and-others regulated-substance data storage unit 4 is in common with the chemical-substance management code 44 in the parts chemical-substance data storage unit 3. One and the same management code denotes one and the same substance. If management codes belonging to different systems are used between the chemical-substance management code 60 in the law-and-others regulated-substance data storage unit 4 and the chemical-substance management code 44 in the parts chemical-substance data storage unit 3, there exists a necessity for preparing a table or the like for the comparison and check.

In the present embodiment, so far, the explanation has been given regarding the four data storage units, i.e., the parts data storage unit 1, the supply-maker data storage unit 2, the parts chemical-substance data storage unit 3, and the law-and-others regulated-substance data storage unit 4. Therein, the explanation has been given assuming that, for simplicity, the four data storage units exist within the one computer. However, there is provided a server for managing the data, and the four data storage units may be provided within a database management system of the server. Otherwise, the following configuration can also be considered: The four units are publicized on the Internet homepage of a company which manufactures and sells the product, or on the Internet homepage of a service company, and an access is made thereto. If the four units exist within the database management system of the server, making an inquiry to the database allows the user to acquire each data on a computer that the user uses in the format illustrated in FIG. 2, FIG. 3, FIG. 4, and FIG. 5. If the four units are publicized on the Internet, the data is acquired by the FTP or the other file transfer functions in response to a request from the user. The data, which is in the format illustrated in FIG. 2, FIG. 3, FIG. 4, and FIG. 5, is received by being formed into a file of the XML format or a certain specified record format.

Next, the explanation will be given below concerning the processing contents by respective processing units of a processing block 5 in FIG. 1.

The processing block 5 in FIG. 1 includes a parts configuration recognition unit 6, a chemical-substance comparison processing unit 8, and a search-target substance extraction unit 10. Also, as lists created in these processing units, there exist a parts contained chemical-substance computation list 7 and a search-target chemical-substance list 9.

Referring to FIG. 15 and FIG. 16, the explanation has been given above concerning the mechanism that allows the materials of the in-company manufactured parts and the substances used in the manufacturing processes to be also represented by the parts data structure which is the same as that of the purchased parts and the outside-manufacturing commissioned parts. In the present invention, in addition to the E-BOM used conventionally, the M-BOM disclosed in the present invention is created. Moreover, at the time of the system processing, based on the tree-structure information described within the BOM, the data in these BOMs are used as if the data were the data stored in a single BOM. On account of this, the processing which will be explained below is performed with both of the BOMs as the target.

First, the explanation will be given below regarding the function of the parts configuration recognition unit 6.

Assume that the above-described E-BOM and M-BOM exist as the data files formed according to the schema structure of the parts table 24 in the parts data storage unit 1. Simultaneously, assume that the item masters 21 also exist for all the items described in these BOMs. Based on the data in the parent-item codes 25, the child-item codes 26, and the member numbers 27 stored in the E-BOM and the M-BOM, the system expands the data into a parts configuration tree whose image is illustrated in FIG. 6. Concretely, a highest-level item code which has no parent-item code is extracted, then being registered as the item of a node ① in FIG. 6. Moreover, parts-table data whose parent-item code is the highest-level item code is extracted, and then items stored in the child-item codes 26 of the data are registered into ② and ③. Furthermore, parts-table data whose parent-item code is the item code registered into ② are registered into nodes ⑥ and ⑦ as child items of the part of ②. As the registration into the nodes on the computer, this registration processing is performed for, e.g., all the records stored in the parts tables 24. As a result, with respect to a product stored on the memory of the system, tree-structured data is created which defines the parent-child relationship of parts configuring the product. Although a method for representing the tree-structured data on the computer will not be described in detail here, using one of the generally used methods is advisable.

When the respective nodes of the tree-structured data created have been displayed as are illustrated in FIG. 6, the nodes which are at the higher levels are traced from left to right in sequence. In addition, with respect to each node, the supply-maker data 30 in the supply-maker data storage unit 2 are retrieved using the item code 22 as the key, thereby extracting the part of the same item code. Next, using, as the key, the data of the supply-maker code 32 and the product number 34 stored in the supply-maker data 30 of the extracted part, the parts chemical-substance data 40 in the parts chemical-substance data storage unit 3 are retrieved. Out of the parts chemical-substance data, the data for which the supply-maker code 41 and the product number 42 are the same is extracted. Furthermore, the chemical-substance management code 44 of the parts chemical-substance data is extracted. The chemical-substance management code extracted is written into a parts contained chemical-substance list 65. The parts contained chemical-substance list is created on the memory, or may be stored in the storage unit. The format of the parts contained chemical-substance list may be a file having links with the corresponding nodes. Otherwise, combinations of the nodes and the chemical-substance management codes may be stored in a table format.

If, in the parts chemical-substance data storage unit 3, there exists none of the supply-maker code 41 and the product number 42 corresponding to the part of the node, it is interpreted that the contents of contained chemical substances of the part have been uninvestigated and unidentified. Moreover, "unknown", which is data for indicating the unidentification, is written into the parts contained chemical-substance list. Also, if the chemical-substance management code is found to be "null" although the supply-maker code 41 and the product number 42 corresponding to the part of the node have been extracted, it is judged that no chemical substance is contained in the part. Furthermore, "null", which is the data for indicating that no chemical substance is contained, is written into the parts contained chemical-substance list. The parts contained chemical-substance lists are created for the respective nodes one after another. The processing in the case of a node which has none of the child-item codes 26, i.e., the node positioned at the end (i.e., terminal) of the tree, is as follows: First, similarly to the above-described case, the parts contained chemical-substance list of the part of the node is created. Moreover, the item code of the parent-item code 25 is traced back. With respect to all the nodes which are at the lower levels than that of the parent item, all the contained chemical-substance information described in the created parts contained chemical-substance lists are added. This allows the described parts contained chemical-substance list to be updated by the added total value of the chemical substances contained in the parts positioned in the tree lower than the node. Repeating this processing allows the creation of a parts contained chemical-substance list 64 of a part at the highest level (which, in FIG. 6, is ①). In the present embodiment, the parts contained chemical-substance lists are created for all the nodes starting from the highest-level node to the lower-levels nodes. Furthermore, when the creation has been completed down to the node positioned at the end, the parent node is traced back in turn, and the updating is performed by the value acquired by adding the contents of the parts contained chemical-substance lists of the child nodes of the node. It is needless to say, however, that the added value may be managed as another list instead of the updating, and that the previously created lists may be saved.

Computing the content amounts of the chemical substances described in the above-described parts contained chemical-substance list is performed as follows:

First, reference is made to the supply-maker data storage unit 2, thereby determining the mass of the part from the value of the product mass 35 and the physical unit of the mass-unit code 36 for defining the physical unit of masses. In addition, based on the determined mass of the part, the amounts of the chemical substances contained in the part are computed from the value of the content amount/rate 46 and the contents of the unit code 47 in the parts chemical-substance data storage unit 3. The computation result is written into the parts contained chemical-substance list.

As explained above, the parts contained chemical-substance lists of the parts of all the nodes in the parts configuration tree illustrated in FIG. 6 are created. What is referred to as "parts contained chemical-substance computation list 7" in FIG. 1 corresponds to these parts contained chemical-substance lists.

The explanation of the processing steps given so far is about the case of searching for all the contained chemical substances of all the parts. In addition to this, the processing range may be limited depending on an object. This means that, for example, the substances are tabulated from halfway of the parts configuration tree, or only specific substances are tabulated.

FIG. 12 illustrates a displayed example of the parts contained chemical-substance computation list 7. The parts contained chemical-substance computation list 7 in FIG. 12 includes chemical-substance management codes, amounts of the substances, and data for indicating pointer at the parts configuration tree 60 for convenience.

Next, the explanation will be given below concerning the processing by the search-target substance extraction unit 10. The search-target substance extraction unit 10 displays a search-condition setting screen illustrated in FIG. 9, thereby receiving the input of search conditions from the user. Moreover, based on the received search conditions, the unit 10 makes reference to the contents of the law-and-others regulated-substance data storage unit 4, thereby creating a search-target chemical-substance list 71. The search-condition setting screen illustrated in FIG. 9 is a displayed example of the data written into the country code 51, the company/law distinction 52, the company/law code 53, and the company/law management level 57 from the law-and-others regulated-substance data 50 in the law-and-others regulated-substance data storage unit 4. In FIG. 9, client-based conditions result from displaying the contents of the company/law management level 57 in the law-and-others regulated-substance data storage unit 4 in an easy-to-understand manner to the user. The client-based conditions allow the user to specify the search conditions in accordance with the definition of the company/law management level 57. Conditions to which checkmarks are attached in squares indicate that the user has selected the conditions as the search conditions. Notations + and - are basically the same as the ones in the ordinary file-display system. Namely, + indicates that plural contents capable of being division-displayed exist collectively in batch, and that the plural contents are in a state of being expansion-displayed. Expanding and collecting in batch the plural contents like this makes it possible to specify the search conditions in a summarized or detailed manner.

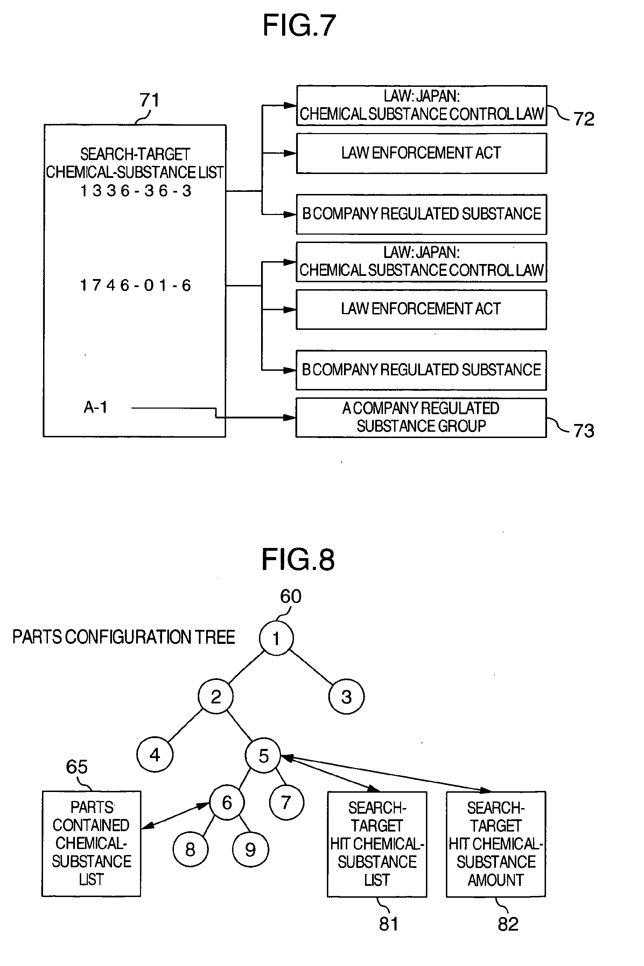

The search-target substance extraction unit 10 extracts all of chemical-substance management codes for which the search conditions inputted by the user on the search-condition setting screen in FIG. 9 and the country code 51, the company/law distinction 52, the company/law code 53, and the company/law management level 57 coincide with each other. Next, the unit 10 writes the extracted chemical-substance management codes into the search-target chemical-substance list 71 in FIG. 7. The search-target chemical-substance list 71 in FIG. 7 is identical to the search-target chemical-substance list 9 in FIG. 9. The law concerning the examination and regulation of Manufacture etc. of Chemical Substances is referred to "Chemical Substance Control Law".

As described earlier, the company/law management code 58 in FIG. 5 is set in order that substances whose characteristics are almost the same are dealt with as a single assembly. When one and the same management number has been written herein, the substances are dealt with as the group or assembly of a single management unit. Namely, the substances for which the country codes 51, the company/law distinctions 52, the company/law codes 53, and the company/law management codes 58 coincide with each other are processed as a single group. Conversely, it can be said that all of chemical-substance management codes of the record for which the company/law management codes 58 coincide with each other are granted the company/law management chemical-substance name 59 common thereto. As an example, assume that the following data exists: The company/law management code 58 is "A-1", the company/law management chemical-substance name 59 is "dioxin-family", the company/law management code is "1746-01-6" (CAS number), and the chemical-substance name 61 is "polychlorinated dibenzo-para-dioxin". In addition to this, the "dioxin family" includes "polychlorinated dibenzo-furan", "coplanar polychlorinated biphenyl", and the like, which are referred to as "dioxin" in an in-batch manner. Thanks to the above-described company/law management code 58, substances like this whose characteristics are almost the same can be dealt with as a single assembly.

The search-target chemical-substance list 9, as illustrated in FIG. 7, records therein the country code 51, the company/law distinction 52, the company/law code 53, and the company/law management level 57 of the law-and-others regulated-substance data 50 in a state of being stringed to each other. Consequently, the search-target chemical-substance list 9 is configured such that it becomes possible to judge in accordance with what law or safety criterion of the law-and-others regulated-substance data 50 each chemical-substance management code has been extracted.

Next, the explanation will be given below regarding the chemical-substance comparison processing 8. The chemical-substance comparison processing 8 is a processing performed after the creation of the parts contained chemical-substance computation list 7 and the search-target chemical-substance list 9. A comparison is made between the parts contained chemical-substance computation list 7 and the search-target chemical-substance list 9. Next, concerning substances for which the chemical-substance management codes coincide with each other, information for indicating the coincidence is added to the parts contained chemical-substance computation list 7. As illustrated in FIG. 8, the list 7 to which the coincidence information has been added is held as a search-target hit chemical-substance list 81 in a manner of being made to correspond to each node of the parts configuration tree as is the case with the parts contained chemical-substance list. Similarly to the parts contained chemical-substance list, the format may be either a file or a table, and the list may be held on the memory or may be stored in the storage unit. Similarly to the parts contained chemical-substance list, the list can be created from halfway of the parts configuration tree as required, or can be provided under a condition of being limited to parts of a specific node.

A search-target hit chemical-substance amount 82 in FIG. 8 turns out to become the amount described in the parts contained chemical-substance computation list 7.

FIG. 10 illustrates a displayed example of the search result onto the display/operation screen 11 in FIG. 1. FIG. 10 illustrates the displayed example of the screen on which the search result is displayed in a tree-like manner for each company/law management level on the basis of the configuration of the law-and-others regulated-substance data 50 in the law-and-others regulated-substance data storage unit 4 and the configuration of the search conditions. In FIG. 10, the tabulation result is displayed which has been acquired by tabulating the substance group defined by the company/law management code 58 for each company/law management level 57. At the time of the display, for example, the highest level of "abolishment" is displayed with red, the level of "reduction" is displayed with yellow, and the level of "management" is displayed with green. Parts, which have violated a specific law or a client company's supply regulation condition or are in a danger of such violation, are displayed in the state of being emphasized. Also, the search-target chemical-substance list 9 records therein the country code 51, the company/law distinction 52, the company/law code 53, and the company/law management level 57 of the applied law-and-others regulated-substance data 50 in the state of being stringed to each other. As a result, as illustrated in FIG. 10, clicking on a substance group in the search-target chemical-substance list 9 displays laws and safety criterions which regulate the substance group.

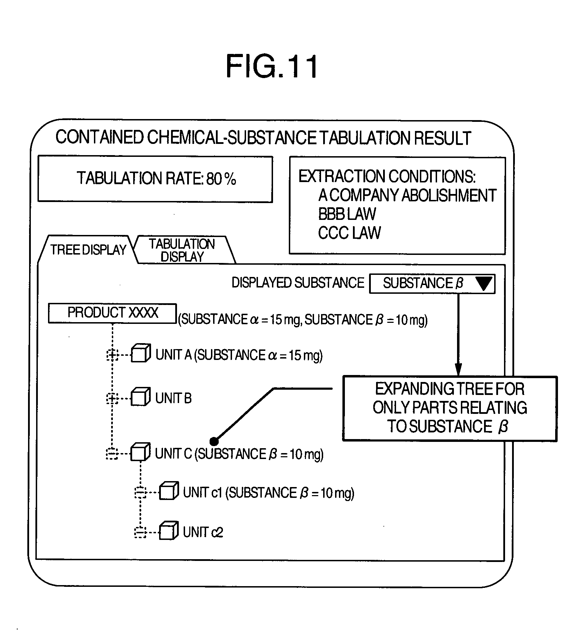

Also, by making reference to the data in the search-target chemical-substance list 9 with a different operation, it becomes possible to display the list of parts containing the substance group. As illustrated in FIG. 11, by focusing attention on a certain substance, it becomes possible to extract and display parts containing the substance from the data contained in the parts configuration tree 63 in FIG. 6. It is also possible to output and provide, to the user of a product, a list of the contained chemical substances for the safety of the product.

The embodiment of the present invention explained so far allows implementation of the following effects:
(1) At the time of designing a product, concerning materials and substances added in manufacturing processes as well, the designer can recognize types and contained amounts of chemical substances to be managed. As a result, the designer can manage and control use amounts of the materials and substances.
(2) At the time of designing a product, the designer can select safe parts, materials, and manufacturing processes. Also, the designer can instruct a supply-maker so that a substance imposing an impact on the environment will not be contained in supplied parts. The designer can present this policy.
(3) At the time of designing a product, the designer can prevent a substance imposing an impact on the environment from being incorporated into a product, including not only the parts but also the materials and manufacturing processes. Also, the designer can easily find out and use parts manufactured using safe substances.

According to the present invention, the use of a parts table makes it possible to recognize amounts of chemical substances contained in in-company manufactured parts, thereby allowing implementation of the compliance with regulations on the chemical substances based on laws or the like.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A system for managing information on chemical substances contained in a product, said system comprising:
an input unit (11),
a storage unit (1, 2, 3) for storing parts data (21, 24), supply-maker data (30), and parts chemical-substance data (40),
said parts data (21, 24) including information on at least item codes (22) of parts used in a product and a parent-child relationship among said parts,
said supply-maker data (30) describing a correspondence among said item codes (22) of said parts, supply-maker codes (32) of said parts, and attribute information on said parts,
said parts chemical-substance data (40) describing information on chemical substances contained in said product on each part basis,
wherein said parts data (21, 24), concerning parts manufactured in the company of their own, further includes information on materials of said parts and chemical substances used in the manufacturing processes by setting material management codes created in a format to be added to item codes (22) of said parts,
an arithmetic-computation unit (5) for identifying said parts by making reference to said supply-maker data (30) on the basis of said item codes (22) in the sequence starting from a part positioned at the highest level in said parent-child relationship described in said parts data (21, 24), and for extracting content information on said chemical substances contained in said parts by making reference to said parts chemical-substance data (40), and for computing content amounts of said chemical substances on the basis of said supply-maker data (30), and for storing the computation results into said storage unit (1, 2, 3),
wherein, after computing said content amounts of said chemical substances down to a part positioned at the lowest end of said parent-child relationship, concerning a part which has the lower-level parts, materials, and chemical substances, said arithmetic-computation unit (5) determines a second computation result acquired by adding up said computation results regarding all of said lower-level parts, materials, and chemical substances which configure said part, and said arithmetic-computation unit (5) stores said second computation result into said storage unit (1, 2, 3), and
an output unit (11) for outputting at least said second computation result.

2. A system for managing information on chemical substances contained in a product, said system comprising:
an input unit (11) for inputting information for specifying regulations or criterions on compliance targets,
a storage unit (1, 2, 3, 4) for storing parts data (21, 24), supply-maker data (30), parts chemical-substance data (40), and law-and-others regulated-substance data (50),
said parts data (21, 24) including information on at least item codes (22) of parts used in a product and a parent-child relationship among said parts,
said supply-maker data (30) describing a correspondence among said item codes (22) of said parts, supply-maker codes (32) of said parts, and attribute information on said parts,
said parts chemical-substance data (40) describing information on chemical substances contained in said product on each part basis,
said law-and-others regulated-substance data (50) describing said information on said regulations or criterions on said chemical substances,
wherein said parts data (21, 24), concerning parts manufactured in the company of their own, further includes information on materials of said parts and chemical substances used in the manufacturing processes by setting material management codes created in a format to be added to item codes (22) of said parts,
an arithmetic-computation unit (5) which, if said information for specifying said regulations or criterions on said compliance targets has been inputted from said input unit (11), extracts said chemical substances and contents which are said targets of said regulations or criterions by making reference to said law-and-others regulated-substance data (50), and identifies said parts by making reference to said supply-maker data (30) on the basis of said item codes (22) in the sequence starting from a part positioned at the highest level in said parent-child relationship described in said parts data (21, 24), and extracts, of said chemical substances contained in said parts, content information on said chemical substances which are said targets of said regulations or criterions by making reference to said parts chemical-substance data (40), and computes content amounts of said chemical substances on the basis of said supply-maker data (30), and stores the computation results into said storage unit (1, 2, 3, 4),
wherein, after computing said content amounts of said chemical substances down to a part positioned at the lowest end of said parent-child relationship, concerning a part which has the lower-level parts, materials, and chemical substances, said arithmetic-computation unit (5) determines a second computation result acquired by adding up said computation results regarding all of said lower-level parts, materials, and chemical substances which configure said part, and said arithmetic-computation unit (5) stores said second computation result into said storage unit (1, 2, 3, 4), and
an output unit (11) for outputting at least said second computation result.

3. The system according to Claim 1,
wherein, if inputting of information for specifying a part has been received from said input unit (11), said arithmetic-computation unit (5), concerning said part specified, computes information on chemical substances contained in said part, and outputs the computation result to said output unit (11).

4. The system according to Claim 2,
wherein, if inputting of information for specifying a part has been received from said input unit (11), said arithmetic-computation unit (5), concerning said part specified, computes information on chemical substances contained in said part, and outputs the computation result to said output unit (11).

5. The system according to Claim 2,
wherein said law-and-others regulated-substance data (50) are created on each regulation, criterion, and chemical-substance basis, and are stored in said storage unit (1, 2, 3, 4) in such a manner that mutually different management codes are added thereto,
said law-and-others regulated-substance data (50) also possessing second management codes, and
wherein, if assessment conditions for said chemical substances have been inputted from said input unit (11), said arithmetic-computation unit (5), based on said assessment conditions inputted, sets management numbers which are common to said second management codes of said plural pieces of law-and-others regulated-substance data (50), and extracts chemical substances and contents which are targets of said plural pieces of law-and-others regulated-substance data (50) possessing said second management numbers common thereto, and performs computation processing of content amounts of said chemical substances.

6. A method for managing information on chemical substances contained in a product, wherein
parts data (21, 24) includes information on at least item codes (22) of parts used in a product and a parent-child relationship among said parts,
supply-maker data (30) including a correspondence among said item codes (22) of said parts, supply-maker codes (32) of said parts, and attribute information on said parts,
parts chemical-substance data (40) including information on chemical substances contained in said product on each part basis, and
said parts data (21, 24), concerning parts manufactured in the company of their own, further including information on materials of said parts and chemical substances used in the manufacturing processes by setting material management codes created in a format to be added to item codes (22) of said parts,
said method comprising the steps of:
identifying said parts by making reference to said supply-maker data (30) on the basis of said item codes (22) in the sequence starting from a part positioned at the highest level in said parent-child relationship described in said parts data (21, 24),
extracting content information on said chemical substances contained in said parts by making reference to said parts chemical-substance data (40),
computing content amounts of said chemical substances on the basis of said supply-maker data (30),
after computing said content amounts of said chemical substances down to a part positioned at the lowest end of said parent-child relationship, concerning a part which has the lower-level parts, materials, and chemical substances,
determining a second computation result acquired by adding up said computation results regarding all of said lower-level parts, materials, and chemical substances which configure said part, and
outputting said second computation result.

7. A method for managing information on chemical substances contained in a product, wherein
parts data (21, 24) includes information on at least item codes (22) of parts used in a product and a parent-child relationship among said parts,
supply-maker data (30) including a correspondence among said item codes (22) of said parts, supply-maker codes (32) of said parts, and attribute information on said parts,
parts chemical-substance data (40) including information on chemical substances contained in said product on each part basis,
law-and-others regulated-substance data (50) including information on regulations or criterions on said chemical substances, and
said parts data (21, 24), concerning parts manufactured in the company of their own, further including information on materials of said parts and chemical substances used in the manufacturing processes by setting material management codes created in a format to be added to item codes (22) of said parts,
said method comprising the steps of:
receiving inputting of said information for specifying said regulations or criterions on said compliance targets,
extracting said chemical substances and contents which are said targets of said regulations or criterions by making reference to said law-and-others regulated-substance data (50), and identifying said parts by making reference to said supply-maker data (30) on the basis of said item codes (22) in the sequence starting from a part positioned at the highest level in said parent-child relationship described in said parts data (21, 24),
extracting, of said chemical substances contained in said parts, content information on said chemical substances which are said targets of said regulations or criterions by making reference to said parts chemical-substance data (40),
computing content amounts of said chemical substances on the basis of said supply-maker data (30),
after computing said content amounts of said chemical substances down to a part positioned at the lowest end of said parent-child relationship, concerning a part which has the lower-level parts, materials, and chemical substances,
determining a second computation result acquired by adding up said computation results regarding all of said lower-level parts, materials, and chemical substances which configure said part, and
outputting said second computation result.

8. The method according to Claim 6, further comprising the steps of:
receiving inputting of information for specifying a part, concerning said part specified,
computing information on chemical substances contained in said part, and
outputting the computation result.

9. The method according to Claim 7, further comprising the steps of:
receiving inputting of information for specifying a part, concerning said part specified,
computing information on chemical substances contained in said part, and
outputting the computation result.

10. The method according to Claim 7,
wherein said law-and-others regulated-substance data (50) are created on each regulation, criterion, and chemical-substance basis, and are stored in such a manner that mutually different management codes are added thereto,
said law-and-others regulated-substance data (50) also possessing second management codes,
said method further comprising the steps of:
if assessment conditions for said chemical substances have been inputted,
setting, based on said assessment conditions inputted, management numbers which are common to said second management codes of said plural pieces of law-and-others regulated-substance data (50),
extracting chemical substances and contents which are targets of said plural pieces of law-and-others regulated-substance data (50) possessing said second management numbers common thereto, and
performing computation processing of content amounts of said chemical substances.
